# EUROPEAN PATENT APPLICATION

(11) **EP 3 495 141 A2**
(43) Date of publication of application: **12.06.2019**
(21) Application number: 18000946.6
(22) Date of filing: 07.12.2018
(51) Int. Cl.: B32B 37/22, B21D 51/26, B26D 7/18, B23K 1/00, B32B 15/08, B65H 35/02

(54) **THE METHOD OF COATING A METAL BASE WITH A COATING MATERIAL, A DEVICE FOR COATING A METAL BASE WITH A COATING MATERIAL AND A CAN OF METAL**

(30) Priority: 08.12.2017 PL 42380817
(71) Applicant: Dramers SA, 62-020 Swarzedz (PL)
(72) Inventor: Dobosz, Jerzy, 60-326 Poznan (PL); Drozynski, Michal, 62-020 Swarzedz (PL)

(57) **Abstract**

The invention allows the production of laminated metal materials for packaging from flat metal sheets
that are joined by welding, rolling or welding. In this technique, a material obstacle is the plastic layer in the immediate vicinity of the weld. The method allows obtaining the necessary margin for edge banding operation. Lamination of flat metal sheets allows for the earlier orientation of the sheet position, depending on the mechanical properties of the sheet, granted to it by previous metallurgical processing. This is particularly important for the production of packaging with varying diameters along the vertical axis.

## Description

The present invention relates to a method of coating a metal base with a coating material of polymeric plastics, a device for coating a metal base with a plastic coating material, and a metal can coated with a plastic coating material

Coating the metal under the covers with plastic layers is known in practice, especially where the metal used is to be protected from weather conditions, or where the environment it is to be protected against unwanted effects of the metal base , as in the case of packaging. Cans intended for storing food have long been manufactured from tinned steel, protected on one side with a plastic layer, to prevent metal ingress into food and to counteract the corrosive impact of food on the packaging and from the other side to preserve the aesthetic appearance of the package. Another application of the coating layer is to place together with it on the package described as having a commercial text about the information and decoration.
Coating layers are most often applied by varnishing. The layer inside must provide good corrosion protection on the product side to be protected and packaged, while appearance, for example gloss and colour, and mechanical resistance are important outside .
Some processes, during the production of a package, such as the assembling of the body, the bottom and the lid in the case of a food can or the cosmetic, impose more detailed requirements on the coating layer. It is important that the coating layer on the outside was both scratch-resistant and easily deformable to withstand the assembling operation without damage.
In addition to painting a partially finished packaging, there are many other options for the outer coating, at an earlier stage in the packaging production chain. For example, coatings made by roller coating, film coating in which a plastic film is applied to the base, and coating by extruding a semi-liquid material directly onto a metal base.
Each method for coating has disadvantages arising from the
material as a coating. The evaporation of solvents is associated with varnishing , especially if the varnishes contain organic solvents.
One of the applications in an area of the metal outer can is to use it for packaging of cosmetic, technical, or chemical means used in a household. In particular administered in form of aerosol and packaged under gas pressure of propellants. Aerosol cans are produced in two ways: as aluminium cans, monolithic, and as a three-piece cans with seam on the side surface mounted to a bottom (dome) and the lid (cone). The choice of material for a can depends on the properties of the contents in the packaging and its designed capacity. Seamless aluminium cans have limited capacity. The welded steel cans do not have such limitations. Cosmetics and chemicals used in the household represent approximately 80% of European production of cans. The total global production of cans is estimated at 15 billion pieces a year, of which around 5.65 billion units are produced in Europe, with an annual upward trend of 5%. The technology of producing products in the form of aerosols requires the use of an elevated pressure inside the can. The pressure level in the can ranges from 2.5 to 3.5 bar, with the strength normally being expected to resist pressure of 15 bar. This requires adequate strength of the steel used for its production and the appropriate thickness of the sheet used. As a result of the plastic forming, the sheet metal for the production of steel cans has different tensile strength in different sheet's directions, therefore a sheet thickness is used to ensure adequate strength of the can for the sheet parameter in the weakest direction, and the weakest point of the steel can is the weld seam along the side. The aerosol can tinplate usually has a thickness of 0.18 mm to 0.38 mm. As a standard, for cans with typical volumes containing household chemicals, with an outside diameter of 52 mm, it is 0.18 mm.

The Polish Patent No. PL191296 discloses a method of coating a metallic base with a thermoplastic coating material characterized in that the base is preheated to a temperature just prior to coating from 70°C to 150°C, preferably from 100°C to 130°C for a coating containing polypropylene, and from a temperature of 80°C to 110°C for a coating comprising polyethylene or polyester. At the first coating station, the surface of the metal base is coated with a molten plastic layer by pressing it in the presence of ozone, preferably in an amount of 8 mg per m². The one-sided coated substrate is transported to a second coating station, heated to a temperature of 70°C to 130°C,
the uncoated substrate surface is coated with a molten squeezed plastic layer y pressing it to the substrate in the presence of ozone, providing a double sided coated substrate. The whole is heated to a temperature above the melting point of the applied material, preferably from 150°C to 280°C, and then cooled.

European Patent Application EP3205494 discloses a coated sheet, made by forming a coating at least one surface of metal sheet and additionally covered with a layer of organic resin on the metal sheet sheath. The coating contains a phenolic resin as a curing agent and tannic acid as an additive. The sheets can be used for making cans and cans' lids.

Japanese patent application JP2015003450 discloses a sheet of metal coated with a thermoplastic resin obtained by coating at least one surface of a sheet with a thermoplastic resin with a polyester base, wherein the polyester type undercoat, if in the form of a dry ground sheet with a thickness of 10 microns, has an elongation at break in the range from 9 to 200% at a tensile speed of 1000 mm / min.

International patent application WO2017174345 discloses a method for producing a laminate in a coating line comprising the following steps:
- delivery of a metal strip;
- preheating the metal strip to a temperature of at least 100°C;
- manufacturing the laminate by adhering the first thermoplastic polymer coating on one main surface of the strip and the second thermoplastic polymer coating layer on the second major surface of the strip, wherein the first thermoplastic polymer consists of a polymer with a melting point below 200°C;
- heating the laminate in a non-oxidizing gas atmosphere to the melting point of the polymer in the second polymer coating layer, and at least 220°C;
- rapidly cooling or quenching the laminate to a temperature below 50°C. The invention also relates to a metal strip formed in 50°C or a can made from it.

The essence of the method of coating a metal base with a plastic coating material for the production of formed packaging by joining a sheet's edges is that a plastic strip (1) with a width corresponding to the metal sheet width of the base (2) containing an adhesive layer (19) is provided for a set of double knives (4), plastic strips with a width of 1 mm to 10 mm are cut out and removed, and then the remaining plastic band is applied to the metal sheets (2) preheated in the oven (6) to temperatures from 50°C to 180°C and pressed with a pressure roller (7), then the plastic bands (16) placed between sheets of the metal substrate (2) are cut in a direction perpendicular to the direction of movement of the plastic material (1). Any polymeric material, in particular polyolefins or polyesters, is used as the plastic. The invention also includes a method of coating a metal base (2) on a previously laid at least one plastic layer (1), and also coating a metal base (2) with a material (1) on the opposite to the previously coated side of the base.

The essence of a device for coating a metal base and a plastic coating material for producing packages formed by joining a metal edges is that it includes a feeder (8) of metal sheets (2), an oven (6) preferably heated by infrared radiation, a feeder (9) a continuous strip of plastic material (1) and an assembly of double blades (4) for cutting the strip of plastic material. The assembly of double blades is in the form of a shaft (14) with pairs of rotating circular blades (15) in which the mutual distance is adjustable from 1 mm to 10 mm, the location of the pairs of circular blades (15) on the shaft (14) is adjustable; or in the form of fixed pairs of blades with an adjustable position. The device has also a collector (10) for removing cut plastic strips equipped with vacuum nozzles, for each strip one nozzle.
The device has a movable table directly in front of the pressure roller (7) (11) for correcting the position of the metal sheet (2) of the metal base, and the blade assembly (12) for cutting the plastic in a direction perpendicular to the direction of movement of the strip (1). The blade (12) may be in the form of a heated guillotine, a laser beam or a water jet. The device can be equipped with an adhesive layer dispenser (13) and a dryer (3) of an adhesive layer to remove excess of solvent. The adhesive dispenser
(13) and dryer (3) are disposed in this case directly behind the continuous plastic strip (1) feeder/uncoiler (9).
The essence of a metal can (17) is that the metal surface (18) is at least on one side coated with at least one layer of a plastic coating material (1), and the horizontal can sections are at least of two different dimensions (20, 21).

The method according to the invention carried out in the device according to the invention allows the production of laminated metal materials for packaging from flat metal sheets, which are joined by pressure welding, rolling or seaming. In this technique, an important obstacle is the plastic layer in the immediate vicinity of the weld. The method allows obtaining the necessary margin for edge banding operation.

Laminating flat sheets allows earlier orientation of the position of 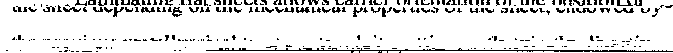 techniques allow directly on the packaging. It is also possible to obtain further aesthetic effect which in the package, such as holographic effect and 3D, in combination with a fancy shape of the package that is inaccessible when using coating technique.
The use of increased sheet strength by orientation of the sheet metal in the direction of its higher strength allows to reduce the thickness of the sheet by about 17% while maintaining unchanged parameters of can strength, as shown in example 5 of the invention. In practice, the production of typical aerosol cans used in the household means the use of sheets with a thickness of 0.15 mm instead of 0.18 mm. The reduction of sheet's thickness, apart from the unquestionable ecological effects associated with the reduction of steel demand, also has a beneficial economic effect resulting from the reduction of electricity consumption in the can forming process and the reduction of transport costs for lighter sheet and lighter finished products in the form of cans or packed aerosol articles.

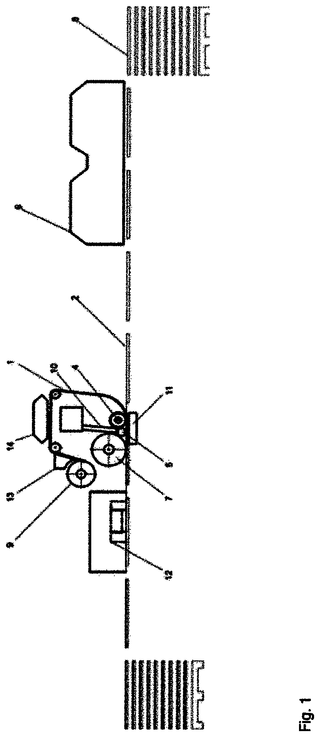

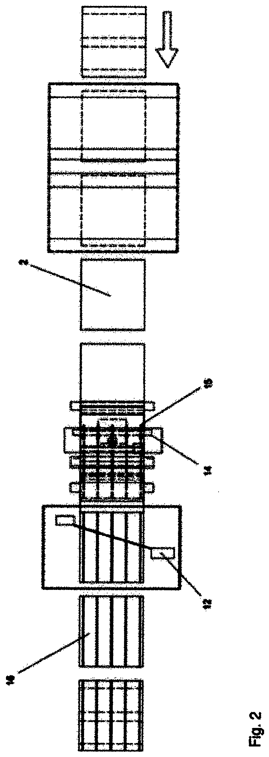

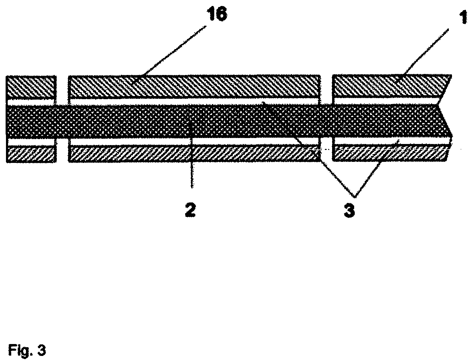

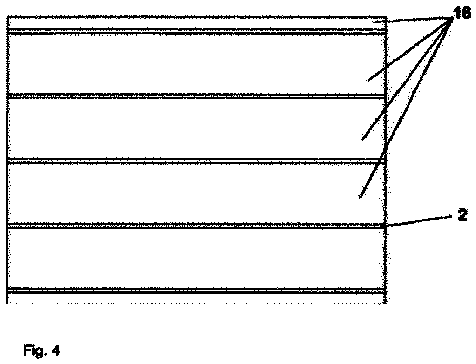

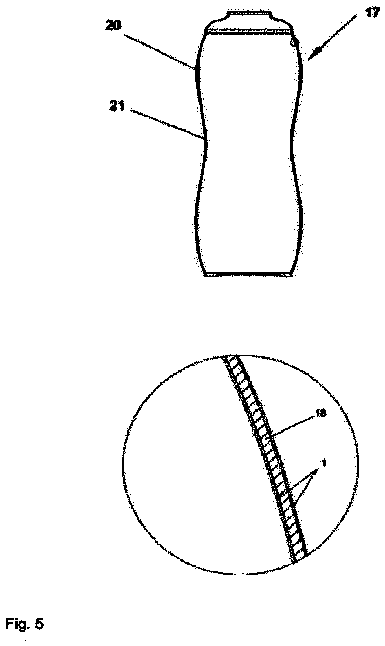

The subject of the invention is shown in the embodiments in the drawing, in which fig. 1 shows the device in a side view, fig. 2 shows a plan view of the device, fig. 3 laminate cross-section, fig. 4 view of a sheet of metal laminated with plastic strips, fig. 5 longitudinal section of the can.

### Example 1

A polyethylene terephthalate tape (1) with a thickness of 15 micrometers (1) and a width corresponding to the width of a 950mm tin plate (2), containing a hot-melt adhesive layer, is continuously fed on a roller containing an assembly of double blades (4), cut and plastic strips with a width of 6 mm, and then laid on sheets of metal base (2), preheated in an oven (6) to temperature of 150°C; and tightened by a pressure roller (7), then the plastic strips between the sheets of the metal base (2) intersect in the direction perpendicular to the direction of movement of the plastic tape (1) with a laser knife. Metal sheets sheet with polyethylene terephthalate strips (16) are obtained.

### Example 2

On a printed polyester tape (1) with a thickness of 10 micrometers (1) with a width corresponding to the width of an aluminium sheet (2), with an engraved roller, a two-component polyurethane adhesive based on ethyl acetate is applied, dried in an oven (3) and continuously shifted onto a roller comprising a set of double roller blades (4), 10 mm wide strips are cut and removed, and then placed on sheets of metal base (2) pre-heated in 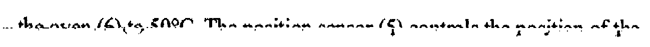 (1), corrects the position of the movable table (11) and tightens with the pressure roller (7), then the plastic strips between the sheets of the metal substrate (2) are intersected in the direction perpendicular to the direction of movement of the plastic tape (1). Metal sheets laminated with polyester straps (16) are obtained.

### Example 3

The device has a tray (8) for sheets of the metal substrate (2), the oven (6), preferably heated by infrared radiation, the tray (9) a continuous strip of plastic material (1), an assembly of double blades (4) for cutting strips of the plastic material. The set of double blades is in the form of fixed pairs of blades with an adjustable position (14) (15) in which the mutual distance is adjustable and ranges from 1 mm to 10 mm.

The device also has a collector (10) for removing the cut strips of the plastic equipped with vacuum nozzles, one nozzle for each strip. The device, directly in front of the platen roller (7) has a sensor of metal sheet's position (5) and a movable table (11) for correcting the position of the metal sheet (2) and a blade assembly (12) for cutting the plastic film in a direction perpendicular to the direction of belt movement. (1). The blade (12) has the form of a heated guillotine. The device is equipped with a dispenser of the adhesive layer (13) and an adhesive layer dryer (3) to remove excess of solvent. The dispenser and dryer are placed directly behind the feeder (9) of the plastic film roller (1).

### Example 4

The can (17) of metal sheet whose surface (18) is coated on both sides with layers of polyester (1) coating material. The outer layer of the coated can acts as a label and decoration of the packaging, while the inner layer protects against the contact of the packaging material with the contents of the can. The horizontal cross-sections of the can have different dimensions (20, 21), with a narrowing around the middle of the can. The plastic shape of the can (17) is given in the blow moulding process in the form of a cylindrically formed metal can on both sides coated with layers of polyester.

### Example 5

Comparison of stresses occurring in tin cans of various thicknesses

| Sheet thickness mm | Thickness reduction % | Pressure load mPa | Max stresses reduced mPa | Security factor |
|---|---|---|---|---|
| 0,18 | 0 | 1,5 | 231 | 2,00 |
| 0,15 | 17% | 1,5 | 279 | 1,65 |

## Claims

1. The method of coating a metal base with a plastic coating material, for the production of moulded packaging, by joining a sheet's metal edges is **characterized in that** a plastic film (1) having a width corresponding to the width of a metal sheet's width (2) and containing an adhesive layer (19) is continuously fed to a double blades assembly (4), plastic strips with a width of 1 mm to 10 mm are cut out and removed, and then placed on metal base in the form of a metal sheet (5), preheated in an oven (6) to a temperature of 50°C to 180°C and tightened using a pressure roller (7), and then the plastic film between the metal base sheets (2) is cut in a direction perpendicular to the direction of movement of the plastic film (1).

2. The method according to claim 1 is **characterized in that** any polymeric material, in particular polyolefins or polyesters, is used as the plastic film.

3. Device for coating a metal base with a plastic coating material for the production of molded packaging, by joining a sheet's metal edges **is characterized in that** it comprises a metal sheet feeder (8), an oven (6), preferably an infrared heater, a film feeder (9)) a continuous plastic band (1), a set of double blades (4) for cutting plastic strips, a collector (10) for removing cut plastic strips, a movable table (11) for correcting the position of the metal sheet (2) of the metal base, directly in front of the pressure roller (7), and a blade assembly (12) for cutting the plastic film in a direction perpendicular to the direction of movement of the belt (1).

4. The device according to claim 1 **is characterized in that** directly after the feeder (9) of the continuous plastic strip (1) is located a dispenser of the adhesive layer (13) and dryer (14) of the adhesive layer.

5. The device according to claim 1 **is characterized in that** the assembly of double blades is in the form of a shaft (14) with pairs of rotating circular blades (15) in which the mutual distance is adjustable from 1 mm to 10 mm, with the position of the pairs of the circular blades (15) on the shaft (14) being adjustable.

6. The device according to claim 1 **is characterized in that** the assembly of double blades is in the form of pairs of fixed blades in which the mutual distance of the blades is adjustable from 1 mm to 10 mm and the position of the blades to each other is adjustable.

7. The device according to claim 1 **is characterized in that the** collector (10) for removing cut strips of a plastic material is equipped with vacuum nozzles, one nozzle for each strip.

8. The device according to claim 1 **is characterized in that** the knife assembly (12) for cutting the plastic in the direction perpendicular to the direction of the movement of the belt (1) is in the form of a heated guillotine, a laser blade, or a water jet.

9. A can of metal, is **characterized in that** the metal surface (17) is at least on one side coated with at least one layer of a plastic covering material (18), the horizontal cross-sections of the can have at least two different dimensions (19, 20).
